## Europäisches Patentamt
## European Patent Office
## Office européen des brevets

(19)

(11) Veröffentlichungsnummer: **0 078 995**
**B1**

(12) # EUROPÄISCHE PATENTSCHRIFT

(45) Veröffentlichungstag der Patentschrift:
16.03.88

(21) Anmeldenummer: 82109966.0

(22) Anmeldetag: 28.10.82

(51) Int. Cl.⁴: **C 09 J 3/14,** C 08 F 220/00,
C 08 F 291/00, C 08 F 4/52

(54) 2-Komponentige No-Mix-Klebstoffe, Verfahren zu ihrer Herstellung und ihre Verwendung.

(30) Priorität: 05.11.81 DE 3143945

(43) Veröffentlichungstag der Anmeldung:
18.05.83 Patentblatt 83/20

(45) Bekanntmachung des Hinweises auf die Patenterteilung:
16.03.88 Patentblatt 88/11

(84) Benannte Vertragsstaaten:
AT BE CH DE FR GB IT LI NL SE

(56) Entgegenhaltungen:
EP-A-0 051 796

(73) Patentinhaber: Henkel Kommanditgesellschaft auf
Aktien, Postfach 1100 Henkelstrasse 67, D-4000
Düsseldorf- Holthausen (DE)

(72) Erfinder: Ritter, Wolfgang, Dr., Oppelner Weg 3,
D-4000 Düsseldorf (DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 078 995 B1

LIBER, STOCKHOLM 1988

**Beschreibung**

Innerhalb der Gruppe der Reaktivklebstoffe kommt den Methacrylatsystemen eine ständig steigende Bedeutung zu. In zweikomponentiger Formulierung sind sie seit Jahren im Markt eingeführt. Die 1. Komponente (Klebstoffkomponente) besteht üblicherweise aus der Lösung eines Elastomeren in einem Monomeren. Die 2. Komponente (Initiator-, Aktivator- oder Härterkomponente) enthält in der Regel ein Peroxid bzw. Hydroperoxid oder aber einen Beschleuniger für den Peroxidzerfall, üblicherweise ein aromatisches Amin oder eine Schiffsche Base. Die beiden Komponenten werden vor der Anwendung intensiv vermischt und dadurch die Polymerisation der Monomeren eingeleitet.

In der Klebstoffkomponente eingesetzte Monomere sind üblicherweise Methylmethacrylat, Methacrylsäure, Butylacrylat und geeignete Dimethacrylate. Zur Eindickung und Elastifizierung werden Polymerkomponenten wie Polychloropren, chlorsulfoniertes Polyethylen, Nitrilkautschuk und Urethane mitverwendet.

Zur Auslösung der radikalischen Polymerisation bei der Vermischung mit der Härterkomponente sind der Klebstoffkomponente zusätzliche Substanzen zugegeben: aromatische Amine, oder Schiffsche Basen bei einer Härterkomponente aus Peroxiden oder Hydroperoxiden und umgekehrt.

Eine Weiterentwicklung dieser 2-Komponentensysteme stellen die sogenannten "No-Mix-Klebstoffe" oder "Acrylatklebstoffe der 2. bzw. 3. Generation" dar (vergl. hierzu "Adhesives Age", 1976, 21-24 sowie "Adhäsion", 1981, 156-161). Hier kann auf die getrennte Vermischung der Klebstoffkomponente und der Härterkomponente verzichtet werden. Die Anwendung gestaltet sich ähnlich wie bei den Kontaktklebstoffen.

Zunächst wird die Initiatorkomponente in dünner Schicht auf eine oder beide der zu verklebenden Oberflächen aufgebracht. Nach einer Wartezeit, die bis zu Stunden betragen kann, wird die Klebstoffkomponente aufgetragen. Die Verklebung erfolgt durch Fixierung der Teile in der gewünschten Position. Leichter Druck für eine Zeitspanne von etwa 15 min ist ausreichend. 75 % der Endfestigkeit werden im Verlauf einer Stunde erreicht.

Diese No-Mix-Klebstoffe weisen eine Reihe von günstigen Eigenschaften auf, zum Beispiel einfache Anwendung, breites Anwendungsspektrum auf unterschiedlichen Oberflächen bei geringem Aufwand der Oberflächenvorbehandlung, Verträglichkeit mit ölverschmierten Oberflächen, rasche Aushärtung bei Raumtemperatur, lange offene Zeit sowie gute Eigenschaften der Verklebung.

Die bisher eingesetzten Systeme haben jedoch auch Nachteile. Der bevorzugte Aktivator Dimethylanilin gilt als cancerogen. Ähnliche Substanzen wie Dimethyl-p-toluidin und Diisopropanol-p-toluidin verhalten sich analog. Dasselbe gilt für die Schiffschen Basen. Die Monomere enthaltenden Stoffgemische sind häufig nur beschränkt lagerstabil. Viele Handelsprodukte müssen im Kühlschrank bei niederer Temperatur gelagert werden.

Es ist bekannt, daß radikalische Polymerisationen durch Organo-Borverbindungen, insbesondere durch Boralkylverbindungen ausgelöst werden können. Bekannt ist beispielsweise der Einsatz von Triethyl-, Tripropyl- und Tributylbor. Boralkyle sind auch schon als Härter für die Verwendung in 2-komponentigen Methacrylatklebstoffen vorgeschlagen worden, siehe hierzu beispielsweise JA-ASen 42 14 318 und 45 29 195 sowie DE-OS 23 21 215. Da die erwähnten Borverbindungen äußerst heftig mit Luftsauerstoff reagieren, konnten sie als Initiatoren für No-Mix-Klebstoffe nicht in Betracht gezogen werden.

Aufgabe der vorliegenden Erfindung ist, 2-komponentige No-Mix-Klebstoffsysteme zu schaffen, die mit Organo-Borverbindungen als Polymerisationsauslöser in der Härterkomponente arbeiten und dabei bevorzugt unter Normaltemperatur durch Zutritt von Luftsauerstoff aktiviert werden. Die Erfindung will weiterhin dieses Arbeitsprinzip mit einer üblichen Klebstoffkomponente aus einem oder mehreren bekannten Monomeren und einem oder mehreren geeigneten elastifizierenden Polymeren verwirklichen, ohne auf den Zusatz von toxikologisch bedenklichen Verbindungen wie aromatischen Aminen bzw. Schiffschen Basen oder von Peroxiden bzw. Hydroperoxiden angewiesen zu sein.

Die technische Lösung dieser erfindungsgemäßen Aufgabenstellung liegt in der Schaffung einer Organo-Borverbindungen enthaltenden Härterkomponente, die bei Ausschluß von Luftsauerstoff lagerstabil ist, bei Zutritt von Luftsauerstoff, insbesondere auch bei Normaltemperatur aktiviert wird, dabei jedoch nicht selbstentzündlich ist und dementsprechend problemlos als Härter in 2-komponentigen No-Mix-Reaktionsklebstoffen eingesetzt werden kann.

Gegenstand der Erfindung sind in einer ersten Ausführungsform 2-komponentige No-Mix-Klebstoffsysteme auf Basis einer polymerisierbare Monomere mit ethylenischen Doppelbindungen enthaltenden Komponente (A) und einer das radikalische Startersystem enthaltenden Komponente (B), wobei das Kennzeichen der Erfindung darin liegt, daß das Startersystem (B) eine bei Normaltemperatur nicht selbst-entzündliche homogene Mischung wenigstens eines mit der Komponente A verträglichen Polymeren und Organo-Borverbindungen mit wenigstens einer durch Sauerstoff aktivierbaren B-C-Bindung ist.

Neben der polymeren Komponente können im Härter nicht-reaktive Lösungsmittel mitverwendet werden. Geeignet sind hier die bekannten Lösungsmittel für Organo-Borverbindungen wie Tetrahydrofuran, Glycol, Polyether wie Diethylenglycoldimethylether, Ester, Halogenkohlenwasserstoffe und dergleichen.

Der Gehalt an Organo-Borverbindung im Härtersystem liegt vorzugsweise nicht über 50 Gewichtsprozent - bezogen auf das Gesamtgewicht des Härters. Besonders bevorzugt sind dabei niedrigere Konzentrationen der Borverbindung, beispielsweise solche im Bereich bis zu etwa 30 Gewichtsprozent des Härters. Es ist weiterhin bevorzugt, daß der Gehalt an Organo-Borverbindung wenigstens etwa 1 Gewichtsprozent des Startersystems (B) ausmacht, wobei Mengen im Bereich von etwa 1 bis 25 Gewichtsprozent besonders geeignet sein können.

2

Die spezielle Zusammensetzung dieses Startersystems (B) wird im einzelnen von der Beschaffenheit der Organo-Borverbindung, der Beschaffenheit des Polymeren und/oder dem gewünschtenfalls mitverwendeten Lösungsmittel bestimmt. In der bevorzugten Ausführungsform der Erfindung weisen sowohl das Startersystem (B) als auch die Klebstoffkomponente (A) vor der Härtung fließ- bzw. streichfähige Beschaffenheit auf. Hierdurch wird der leichte Auftrag der Komponenten auf die miteinander zu verklebenden Werkstoffe ermöglicht. Die in der Härterkomponente (B) einzusetzenden Stoffe bestimmen mit ihren physikalischen Eigenschaften dementsprechend die Mischungen und Mischungsverhältnisse. Werden beispielsweise feste Organo-Borverbindungen und bei Normaltemperaturen feste Polymere verwendet, so ist die Mitverwendung inerter Lösungsmittel der genannten Art erforderlich, um die pastöse bzw. streichfähige Beschaffenheit der Härterkomponente (B) zu gewährleisten. Werden andererseits beispielsweise viskose Polymermassen - insbesondere in größerer Menge - in dieser Härterkomponente B eingesetzt, so kann sich die Mitverwendung von inerten Lösungsmitteln erübrigen. Hier kann eine bevorzugte Ausführungsform der Erfindung liegen, wie im einzelnen noch geschildert wird.

Die in der Initiatorkomponente B eingesetzten Polymeren sollen mit der Klebstoffkomponente A und insbesondere den darin eingesetzten Monomeren verträglich sein. Diese -Polymeren werden zweckmäßigerweise so gewählt, daß sie ihrerseits den fertigen Klebstoff positiv beeinflussen. Geeignet sind beispielsweise elastifizierende Polymere.

Die Initiatorkomponente B wird unter völligem Sauerstoffausschluß hergestellt. Überraschenderweise hat sich gezeigt, daß solche Organo-Borverbindungen enthaltende Initiator-Komponenten lagerstabil sind und daß ihr Auftrag auf eine oder beide der zu verklebenden Werkstoff-Oberflächen gefahrlos vorgenommen werden kann. Nach dem Auftragen kann mit dem Verkleben noch geraume Zeit, zum Beispiel bis zu mehreren Stunden gewartet werden, ohne daß die Initiatorkomponente ihre Reaktivität verliert.

Durch das vollständige Fehlen von Aktivatoren und Initiatoren in der Klebstoffkomponente A ist diese unbegrenzt lagerfähig. Die erfindungsgemäß einzustellende Verklebung zeigt hervorragende physikalische Eigenschaften. Die erreichten Zugscherfestigkeiten sind hoch. Die Härtungsgeschwindigkeit kann innerhalb weiter Grenzen variiert werden. Das System weist alle Vorteile der bisherigen No-Mix-Klebstoffe auf, ohne jedoch den Mangel geringer Lagerstabilität oder hoher Toxizität zu zeigen.

Im einzelnen gelten zu der Klebstoffkomponente A bzw. der Härterkomponente B die folgenden Angaben:
Klebstoffkomponente A

Als polymerisierbare Bestandteile können hier die zahlreichen bekannten Verbindungen mit polymerisierbarer ethylenischer Doppelbindung eingesetzt werden, die üblicherweise in Reaktionsklebstoffen zur Verwendung kommen. Insbesondere geeignet sind die Ester von Acrylsäure und/oder α-substituierten Acrylsäuren wie Methacryl -säure - im folgenden als (Meth)-acrylsäureverbindungen bezeichnet - mit monovalenten oder polyvalenten, insbesondere zweiwertigen Alkoholen. Geeignet sind aber auch andere bekannte Derivate der (Meth)-acrylsäure, insbesondere die entsprechenden Säureamide, die am Amidstickstoff auch substituiert zum Beispiel mit Kohlenwasserstoffresten sein können. Weitere mögliche Substituenten in α-Stellung der (Meth)-acrylsäurederivate sind beispielsweise Halogen, insbesondere Chlor und/oder Brom, Cyan oder allgemein Alkylreste mit bis zu 10 C-Atomen.

Als Beispiele für (Meth)-acrylsäureester monovalenter Alkohole seien genannt: (Meth)-acrylsäuremethylester, (Meth)-acrylsäureethylester, (Meth)-acrylsäurebutylester, (Meth)-acrylsäureethylhexylester. Beispiele entsprechender Ester mit polyvalenten Alkoholen sind solche mit Ethylenglycol, Diethylenglycol, Polyethylenglycol und Trimethylolpropan, Di- und Mono(meth)-acrylsäureester von Glycerin, Di(meth)-acrylsäureester von Tri- und Tetraethylenglycol, von Di-, Tri-, Tetra- und Pentapropylenglycol, die Di(meth)-acrylsäureester von ethoxyliertem oder propoxyliertem Diphenylolpropan. Auch kommen (Meth)-acrylsäureester von Alkoholen in Frage, die sich vom Dihydroxymethyltricyclodecan ableiten oder auch solche, die auf Basis von Tricyclodecan hergestellt worden sind, wobei zwei alkoholische Funktionen im Ringsystem durch Umsetzung mit Dicarbonsäuren wie Maleinsäure oder auch Cyclohexandicarbonsäure oder Terephthalsäure verlängert sind. Weiterhin sind verwendbar Umsetzungsprodukte des Diglycidylethers von Diphenylpropan mit Methacrylsäure und/oder Acrylsäure. Auch sind Reaktionsprodukte von Diisocyanaten oder Triisocyanaten, zum Beispiel Toluylendiisocyanat, Diphenylmethandiisocyanat, Isophoron, Diisocyanat, trimerisiertem Toluylenisocyanat und dergleichen mit Hydroxyalkyl-(meth)-acrylaten als polymerisierbare Bestandteile brauchbar.

Geeignet sind aber auch polymerisierbare Monomere wie Vinylacetat, Vinylhalogenide, zum Beispiel Vinylchlorid, Vinylbromid oder Vinylfluorid, Styrol, Diphenylbenzol, Crotonsäure- und Maleinsäureester oder die sogenannten, gegebenenfalls styrolisierten ungesättigten Polyesterharze. Diese zuletzt genannten Verbindungen werden im allgemeinen in Reaktionsklebstoffen nur in untergeordneter Menge, beispielsweise in Mengen bis zu 25 Gewichtsprozent der polymerisierbaren Bestandteile mitverwendet.

Außerdem kommen in Betracht 2-Acryloyloxyethylphosphat, 2-Methacryloyloxyethylphosphat, Bis-2-acryloyloxyethylphosphat, Bis-2-methacryloyloxyethylphosphat, Tris-2-acryloyloxyethylphosphat, Tris-2-methacryloyloxyethylphosphat und Säureamide wie etwa Dimethylenbis(meth)acrylamid, Tetramethylenbis(meth)acrylamid, Trimethylhexamethylenbis(meth)acrylamid, Tri(meth)acryloyldiethylentriamin und dergleichen mehr.

Es ist zweckmäßig, Polymerisate wie Polymethyl(meth)acrylat, Copolymere von Methyl(meth)acrylat, Polychloropren, chlorsulfoniertes Polyethylen, Nitrilkautschuke und Urethane zur Verstärkung bzw. Elastifizierung und gleichzeitig als Verdickungsmittel zuzusetzen, um die Verarbeitung des Klebstoffes zu

3

erleichtern. Im einzelnen gelten hier die Angaben des bekannten einschlägigen Standes der Technik.

In vielen Fällen ist es notwendig oder zweckmäßig noch weitere Hilfsstoffe wie Füllstoffe, zum Beispiel Quarzmehl oder dergleichen zuzugeben. Schließlich kann es zweckmäßig sein, mit geeigneten Farbstoffen beziehungsweise Pigmenten einzufärben.

Monomere, Polymere und Füllstoffe werden durch intensives Rühren gelöst bzw. homogeniersiert. Die so erhaltenen Klebstoffkomponenten A sind praktisch unbegrenzt lagerfähig.

Initiatorkomponente B

Als Borverbindungen, die als Initiator wirken, kommen bekannte bzw. auf bekannte Weise herstellbare, durch Sauerstoff, insbesondere durch Luftsauerstoff aktivierbare Organo-Borverbindungen in Betracht. Es kann im Rahmen der Erfindung allerdings bevorzugt sein, daß auch die reine Organo-Borverbindung dieser Komponente B bei Normaltemperatur an Luft nicht selbstentzündlich ist. Hierdurch wird eine erhöhte Sicherheit beim Arbeiten mit den erfindungsgemäßen Reaktionsklebstoffen geschaffen.

Organo-Borverbindungen, die bei Normaltemperatur oder nur schwach erhöhten Temperaturen durch Sauerstoff, insbesondere durch Luftsauerstoff unter Peroxidbildung und anschließenden radikalischen Zerfall aktiviert werden, sind in erster Linie Boralkyl- und/oder Borarylverbindungen. Geeignet sind hier die entsprechenden Trialkyl- bzw. Triarylverbindungen - gegebenenfalls auch entsprechende Verbindungstypen mit gemischten Resten. Geeignet sind insbesondere aber auch entsprechende Organo-Borhydridverbindungen. Eine besonders geeignete Klasse von Organo-Borverbindungen für die Herstellung dieser Initiatorkomponente B sind Organo-Bor-mono-hydridverbindungen, insbesondere Dialkylbormonohydride. Typische Vertreter solcher Borverbindungen sind beispielsweise 9-Borabicyclo [3.3.1] nonan, Diisopinocampheylboran, Dicyclohexylboran, Thexylboran-(2,3-dimethyl-2-butylboran), 3,5-Dimethylborinan, Diisoamylboran. Unter diesen Verbindungen ist das zuerst genannte 9-Borabicyclo [3.3.1] nonan aus praktischen Gründen bevorzugt. Die vorstehend genannten Verbindungen können beispielsweise aus Natriumborhydrid und Bortrifluorid mit geeigneten Olefinen oder Diolefinen hergestellt werden. Auch können zur Darstellung Diboran, dessen Ether-, Amin- oder Sulfidkomplexe eingesetzt werden.

Eine Zusammenstellung der Herstellungsmöglichkeiten geeigneter Borverbindungen findet sich in der Monographie Herbert C. Brown, 1975 "Organic Synthesis via Boranes", Verlag John Wiley & Sons. Als Initiatoren können weiterhin einfache Trialkylborane sowie Hydroborierungsprodukte von Dialkylboranen und Olefinen eingesetzt werden.

Als Olefine sind brauchbar Ethen, Propen, Buten, Isobuten, Hexen, Cyclohexen, Vinylchlorid, Allylchlorid, Allylamin oder auch Methacrylsäuremethylester, Vinylacetat oder Crotonsäuremethylester. Unter den geeigneten Verbindungen sind beispielsweise erwähnenswert: Trimethylbor, Triethylbor, Tripropylbor, isomeres Tributylbor und isomeres Trihexylbor. Besonders geeignet sind: Diisopinocampheylbutylbor, Thexylcyclohexylcyclopentylbor, Thexyllimonylbor, Trinorbornylbor, B-Butyl-9-borabicyclo-[3.3.1] bor, B-Isobutyl-9-borabicyclo [3.3.1] bor, B-2-(4-Cyclohexenyl)ethyl-9-borabicyclo [3.3.1] bor, B-Cyclopropyl-9-borabicyclo [3.3.1] nonan, B-p-Tolyl-9-borabicyclo [3.3.1] nonan, B-tert.-Butyl-3,5-dimethylborinan. Weiter sind typische Vertreter für geeignete Borverbindungen das Umsetzungsprodukt von 1,2-Dihydroxybenzol mit Borwasserstoff (Catecholboran) und Tri-n-butylboroxin. Auch alkylierte ($C_{1-9}$) Dihydroxybenzole sind als Ausgangsmaterial brauchbar. Erfindungsgemäß besonders geeignet ist das 9-Borabicyclo-[3.3.1] nonan und dessen Umsetzungsprodukte mit Olefinen.

Die Gesamtzahl der C-Atome in den Organo-Borverbindungen beträgt vorzugsweise nicht mehr als etwa 50 und insbesondere bis zu etwa 25, zweckmäßigerweise bis zu etwa 12.

Als Polymerkomponenten werden in dieser Initiatorkomponente B besondere filmbildende Polymere wie Polymethyl(meth)acrylat, Polychloropren, chlorsulfoniertes Polyethylen, Nitrilkautschuke und/oder Polyurethane eingesetzt. Geeignete organische Lösungsmittel, die zusammen mit den Polymeren oder an ihrer Stelle Verwendung finden können, sind nicht-reaktive Komponenten, beispielsweise Ether, Ester, Alkohole, Ketone, Halogenkohlenwasserstoffe und dergleichen, die insbesondere bei Raumtemperatur flüssig sind. Besonders geeignet sind Tetrahydrofuran und Essigester. Bei der Verwendung von Alkoholen ist allerdings zu berücksichtigen, daß sie mit B-H-Bindungen reaktiv sein können.

Die Mischungsverhältnisse von Borverbindung, Polymeren und/oder Lösungsmitteln bestimmen sich - unter Berücksichtigung der eingangs erwähnten Mischungsverhältnisse von Borverbindung zu Polymerem und/oder Lösungsmittel - durch die physikalischen Eigenschaften der hier eingesetzten Komponenten in Verbindung mit der angestrebten viskos fließfähigen bzw. pastösen Beschaffenheit dieser Masse. So können die Mischungsverhältnisse von Polymerem: Lösungsmittel je nach Polymerisationsgrad des Polymeren im Bereich von 5 : 95 Gewichtsteilen bis 95 : 5 Gewichtsteilen der genannten Komponenten liegen.

Die Einmischung der Organo-Borverbindungen in die anderen Bestandteile dieser Initiatorkomponente B erfolgt unter vollständigem Ausschluß von Sauerstoff. Hierzu wird unter Schutzgas beispielsweise Stickstoff mit hochgereinigten Komponenten gearbeitet. Unter Luftabschluß sind die Stoffgemische praktisch unbegrenzt haltbar.

Eine weitere Ausführungsform der Erfindung betrifft das im folgenden geschilderte Verfahren zur Herstellung einer durch Zutritt von Luftsauerstoff aktivierbaren, Organo-Borverbindungen als Polymerisationskatalysatoren enthaltenden Härterkomponente B für die geschilderten No-Mix-Klebstoffsysteme. Gemäß dieser Ausführungsform werden in einer ersten Verfahrensstufe polymerisierbare Monomere mit ethylenischen Doppelbindungen unter Ausschluß von Sauerstoff durch Zugabe von Organo-Borverbindungen polymerisiert. Nach Erreichen der verarbeitungstechnisch erforderlichen Eindickung wird diese Polymerisation durch Zugabe eines anionischen Inhibitors abgebrochen. Erhalten wird damit eine Organo-Borverbindungen enthaltende Masse, die bei Ausschluß von Luft lagerstabil ist und als wirkungsvolle Initiatorkomponente B in den erfindungsgemäß beschriebenen No-Mix-Klebstoffsystemen eingesetzt werden kann.

Die Erfindung macht sich hier die literaturbekannte Tatsache zu nutze, daß Organo-Borverbindungen nicht nur nach einem radikalischen Mechanismus - unter Zutritt von Sauerstoff - polymerisationsauslösend wirken, daß vielmehr in Abwesenheit von Sauerstoff ethylenisch ungesättigte Monomere auch nach einem langsam ablaufenden anionischen Mechanismus durch Organo-Borverbindungen polymerisiert werden können. Dieser vergleichsweise langsam verlaufende Reaktionsschritt führt zur allmählichen Eindickung einer zunächst leicht beweglichen Monomerenphase unter dem Einfluß der Organo-Borverbindungen. Ist die hinreichende Eindickung durch Polymerbildung erfolgt, kann die anionische Polymerisation abgebrochen werden. Auch hier liegt dann letztlich als Härterkomponente B eine Mischung von Organo-Borverbindungen und polymeren Komponenten vor.

Die hier eingesetzten ethylenisch ungesättigten Monomeren entsprechen den zuvor im Zusammenhang mit der Klebstoffphase A aufgezählten Monomertypen. Besonders geeignet sind auch hier Derivate von Acrylsäure und/oder Methacrylsäure, besonders entsprechende Ester mit monofunktionellen oder polyfunktionellen Alkoholen sowie entsprechende Säureamide, die am Amidstickstoff in an sich bekannter Weise, beispielsweise mit Kohlenwasserstoffresten substituiert sein können.

Bezüglich der einzusetzenden Organo-Borverbindungen gelten die zuvor gemachten allgemeinen Angaben. Bevorzugt werden auch in dieser Ausführungsform Boralkyl-und/oder Boraryl-Verbindungen verwendet, zweckmäßigerweise entsprechende Organo-Borhydride. Besondere Bedeutung besitzen auch hier Dialkylborhydride mit einer so hinreichenden Stabilität gegen Luftzutritt, daß sie unter Normalbedingungen nicht selbstentzündlich sind. Ein besonders wichtiger Vertreter ist das 9-Borabicyclo [3.3.1] nonan (9-BBN).

Als Inhibitoren bzw. Stabilisatoren gegenüber anionischer Polymerisation sind alle die Verbindungen gut geeignet, die auch zum Stabilisieren von α-Cyanacrylsäureestern brauchbar sind, beispielsweise saure gasförmige Stoffe wie $SO_2$, $NO_2$, $NO$, $CO_2$, $HCl$ und $HF$. Weitere mögliche Inhibitoren sind Phosphorsäure, Borsäure, Borsäureester, Sulfonsäuren oder Sultone. Im Rahmen der Erfindung besonders geeignete Inhibitoren sind hier jedoch Carbonsäuren mit freier Carboxylgruppe. Der Einsatz niederer Carbonsäuren wie Essigsäure oder ihrer Derivate wie Trichlor- und Trifluoressigsäure kann zweckmäßig sein. Als besonders zweckmäßig erweist sich allerdings die Verwendung von olefinisch ungesättigten Carbonsäuren, die über ihre Doppelbindung einerseits mit Organo-Borhydridverbindungen reaktiv sind, andererseits aber auch über diese Doppelbindung in eine Polymerisationsreaktion eingehen können und damit letztlich aktiver Klebstoffbestandteil werden. Besonders geeignet als Inhibitoren gegen anionische Polymerisation sind dementsprechend Acrylsäure und/oder Methacrylsäure. Ihre freie Carboxylgruppe bringt nicht nur den anionisch verlaufenden Polymerisationsprozeß zum Stillstand, im Klebstoffsystem erfüllen die freien Carboxylgruppen in an sich bekannter Weise ihre haftverbessernde Wirkung.

Bei der Herstellung der Initiatorkomponente B in dieser Ausführungsform der Erfindung kann es bevorzugt sein, die Organo-Borverbindung der Komponente B mehrstufig zuzusetzen. Hierbei wird ein erster Anteil der Organo-Borverbindung zur in situ-Herstellung des Polymeren durch anionische Polymerisation in Abwesenheit von Sauerstoff verwendet. Nach Abbruch des Polymerisationsvorganges durch Zusatz insbesondere einer ethylenisch ungesättigten Carbonsäure kann ein zweiter Anteil der Organo-Borverbindung zugegeben werden. Werden hier Organo-Borhydride verwendet, findet ihre Umsetzung mit im Reaktionsgemisch noch vorliegenden Doppelbindungen zu entsprechenden Bortrialkylverbindungen statt, die letztlich als hochaktive Starter für die Klebstoffkomponente A dienen.

Die Viskositäten sowohl der Härterkomponente B als auch der Klebstoffkomponente A liegen bevorzugt im Bereich von etwa 200 bis 100 000 mPas, wobei optimale Viskositäten üblicherweise im Bereich von etwa 1 000 bis 20 000 mPas liegen können.

Die Erfindung betrifft schließlich die Verwendung der neuen No-Mix-Klebstoffsysteme aus den geschilderten Komponenten A und B zum konstruktiven Einsatz und dabei insbesondere zum Verbinden von Metall, Holz, Glas, Keramik und/oder Kunststoffen. Nach einem weiteren Aspekt der Erfindung werden diese No-Mix-Klebstoffsysteme als chirurgisches Bindemittel zum Verbinden von hartem Gewebe, insbesondere Knochen, eingesetzt. Hierbei kommt sowohl das Verbinden von entsprechenden Gewebsteilen miteinander als die Verklebung von beispielsweise Knochengewebe mit Metallen und/oder Kunststoffen in Betracht. Schließlich betrifft die Erfindung die Verwendung der neuartigen No-Mix-Klebstoffsysteme als dentalmedizinisches Binde- und Füllmaterial.

Charakteristisch für die neuen Klebstoffsysteme ist, daß sie auch dann wirksam haften und gute Verklebungen bilden, wenn die miteinander zu verklebenden Oberflächen nicht vollständig getrocknet sind. Insbesondere auf dem Gebiet des chirurgischen bzw. dentalmedizinischen Einsatzes liegt hier ein wichtiger Vorteil.

In an sich bekannter Weise können den Reaktionskomponenten A und B weitere Hilfsstoffe zugesetzt sein, beispielsweise Füllstoffe, Pigmente, zusätzliche Stabilisatoren und dergleichen.

**Beispiel**

Herstellung von Klebstoffkomponenten (A):

I    6,2   g   Methylmethacrylat
     0,8   g   Methacrylsäure
     3,0   g   chlorsulfoniertes Polyethylen

II   4,5   g   Methylmethacrylat
     0,5   g   Methacrylsäure
     4,0   g   Polymethylmethacrylat

III  21,0  g   Ethylenglycoldimethacrylat
     2,5   g   Methacrylsäure
     20,0  g   Polymethylmethacrylat

IV   7,5   g   Triethylenglycoldimethacrylat
     2,0   g   Polymethylmethacrylat
     0,5   g   Methacrylsäure

V    7,5   g   Dimethacrylat des propoxylierten Bisphenol A
     2,0   g   Polymethylmethacrylat
     0,5   g   Methacrylsäure.

Herstellung von Initiatorlösungen (B):

1. 3,0 g 9-Borabicyclo [3.3.1] nonan (9-BBN) und 20 g Polymethylmethacrylat werden unter vollkommenem Sauerstoffausschluß in einen 250-ml-Rundkolben gegeben. In den Kolben werden im Hochvakuum 77 g Essigsäureethylester kondensiert. Der Kolbeninhalt wird aufgetaut und der Kolben mit Argon oder Reinstickstoff begast.

2. 25 g 9-BBN und 25 g Polymethylmethacrylat werden unter vollkommenem Sauerstoffausschluß in einen 250-ml-Kolben gegeben. In den Kolben werden im Hochvakuum 75 g Tetrahydrofuran kondensiert. Der Kolbeninhalt wird aufgetaut und der Kolben mit Argon oder Reinstickstoff begast.

3. 4,0 g 9-BBN werden unter vollständigem Sauerstoffausschluß in einem 250-ml-Kolben vorgelegt. In diesen Kolben werden im Hochvakuum (>10$^{-4}$ Torr) 100 g trockenes, frisch destilliertes Methylmethacrylat umkondensiert. Der Kolben wird verschlossen und geschüttelt, bis das 9-BBN in Lösung gegangen ist. Nach zwei Tagen zeigt das Gemisch eine deutlich erhöhte Viskosität. Es werden dann - ebenfalls unter vollständigem Sauerstoffausschluß - 0,5 g sauerstofffreie, unter Argon destillierte Methacrylsäure und 4,0 g 9-BBN zugegeben. Diese Mischung ist ohne weitere Viskositätszunahme lagerstabil.

Unter Verwendung der so hergestellten Klebstoffkomponenten (A) und Initiatorlösungen (B) werden verschiedenartige Verklebungen durchgeführt.

a) Nach DIN 53 281 /53 282 vorbereitete (sandgestrahlte und entfettete) Eisenbleche werden an der Luft mit der Initiatorlösung eingepinselt. Viskose Initiatorlösungen werden bevorzugt mit einem Rakel in einer Schichtdicke von 200 µm aufgetragen. Direkt nach dem Auftragen der Initiatorlösung wird auf die korrespondierenden Bleche die Monomer-/Elastomerkomponente aufgebracht und die Prüfkörper unter leichtem Druck fixiert. Nach 24 Stunden werden die Zugscherfestigkeiten in N/mm$^2$ ermittelt. Die Ergebnisse sind in der folgenden Tabelle zusammengefaßt.

Zugscherfestigkeiten(N/mm$^2$)mit No-Mix-Klebstoffen

**Klebstoffkomponenten**

| | | I | II | III | IV | V |
|---|---|---|---|---|---|---|
| Initiator- | 1 | 24 | 17 | 9,6 | | |
| lösung | 2 | 19 | 15 | 10 | | |
| | 3 | 28 | 24 | 11 | 16,5 | 13,5 |

b) Nach DIN 53281 / 53282 vorbereitete (sandgestrahlte und entfettete) Eisenbleche werden an der Luft mit der Initiatorlösung eingepinselt. Die Bleche werden 30 Minuten an der Luft gelagert. Im Anschluß wird die Monomer-/Elastomerkomponente aufgetragen, und die Prüfkörper werden unter leichtem Druck fixiert. Nach 24 Stunden werden die Zugscherfestigkeiten in N/mm$^2$ ermittelt. Die Ergebnisse sind in der folgenden Tabelle zusammengefaßt.

Zugscherfestigkeiten (N/mm$^2$) von No-Mix-Klebstoffen

6

**Klebstoffkomponenten**

|  |  | I | II | III |
|---|---|---|---|---|
| Initiator- | 1 | 19 | 19 | 10 |
| lösung | 2 | 13 | 17 | 9 |

c) Nach DIN 53281 / 53282 vorbereitete (sandgestrahlte und entfettete) Eisenbleche werden an der Luft mit der Initiatorlösung 1 eingepinselt. Nach 2 Stunden Wartezeit wird der Klebstoff I aufgetragen, und die Fügeteile unter leichtem Druck fixiert. Die Zugscherfestigkeit nach 24 Stunden beträgt 26,7 N/mm².

d) Nach DIN 53281 / 53282 vorbereitete (sandgestrahlte und entfettete) Eisenbleche werden an der Luft mit der Initiatorlösung 1 eingepinselt. Nach 10minütiger Wartezeit wird der Klebstoff I aufgetragen, und die Fügeteile werden unter leichtem Druck fixiert. Die Zugscherfestigkeit nach 4 Stunden beträgt 13 N/mm².

e) Auf Eisenbleche, die nach DIN 53 281 / 53 282 vorbereitet (sandgestrahlt und entfettet) wurden, wird mit dem Rakel eine 200 µm dicke Schicht des Initiators 3. aufgetragen. Die korrespondierenden Bleche werden mit der Klebstoffkomponente II bzw. IV beschichtet. Die Fügeteile werden unter leichtem Druck fixiert und die Zugscherfestigkeit nach 30 bzw. 60 min bestimmt. Folgende Ergebnisse wurden erzielt:

Zugscherfestigkeiten N/mm²

**Klebstoffkomponente**

| Wartezeit zwischen | | II | IV |
|---|---|---|---|
| toffapplikation | 30min | 8,0 | 10,0 |
| und Zerreißen | 60min | 15,5 | 12,5 |

**Beispiele zur Anwendung in der Medizin**

**Probekörper**

Knochenprüfkörper aus Rindercortalis mit den Abmessungen 50 x 20 x 5 mm wurden in der Mitte - exakt rechtwinklig zu den Seitenflächen (50 x 5 mm) - mit einer Diamant-Trennsäge unter Wasserspülung osteotomiert. Auf diese Weise wurden paßgenaue Fügeteile mit einer Berührungsfläche von 1 cm² hergestellt.

**Probekörpervorbehandlung**

Die nicht weiter vorbehandelten Knochenprüfkörper wurden 2 Stunden in eine 37°C warme Ringerlösung gelegt, um die Knochen intensiv zu benetzen.

**Verklebung**

Nur der Härter (B) wird in dünner Schicht auf beide zu verklebenden Flächen aufgetragen. Direkt im Anschluß wird das Klebstoffharz (A) appliziert.

Die Prüfkörper werden gefügt, in eine Presse aus PVC überführt und mit 5 N belastet. Die Klebepresse verhindert ein seitliches Verschieben der Prüfkörper während der Aushärtung.

**Aushärtebedingungen**

Die gefügten Knochen werden in der Klebepresse 20 min lang in einer Klimakammer bei 37°C und ca. 100 % relativer Luftfeuchtigkeit gelagert. Im Anschluß werden sie der Klebepresse entnommen und 20 Std. in Ringerlösung bei 37°C gelagert.

**Festigkeitsmessung**

Die Zugfestigkeit wird an einer Universalprüfmaschine mit einer Vorschubgeschwindigkeit von 1,0 mm/min zerrissen.

Aufgrund der durch das natürliche Substrat vorgegebenen breiten Streuung der Messwerte wurden jeweils die Festigkeitsbereiche aus 8 Einzelversuchen angegeben.

**Harzkomponenten A**

| | | |
|---|---|---|
| A 1 | Methylmethacrylat | 50 Gew.-% |
| | IPA 514 [1] | 5 Gew.-% |
| | Polymethylmethacrylat [2] | 45 Gew.-% |
| A 2 | Methylmethacrylat | 45 Gew.-% |
| | IPA 514 | 10 Gew.-% |
| | Polymethylmethacrylat | 45 Gew.-% |
| A 3 | Methylmethacrylat | 50 Gew.-% |
| | IPA 514 | 5 Gew.-% |
| | Perfluoralkylmethacrylat [3] | 5 Gew.-% |
| | Polymethylmethacrylat | 40 Gew.-% |
| A 4 | Methylmethacrylat | 45 Gew.-% |
| | Methacrylsäure | 5 Gew.-% |
| | IPA 514 | 5 Gew.-% |
| | Perfluoralkylmethacrylat | 5 Gew.-% |
| | Polymethylmethacrylat | 40 Gew.-% |
| A 5 | Diacryl 101 [4] | 95 Gew.-% |
| | IPA 514 | 5 Gew.-% |
| A 6 | Acetacetoxyethylmethacrylat | 65 Gew.-% |
| | IPA 514 | 5 Gew.-% |
| | Polymethylmethacrylat | 30 Gew.-% |

1) Gemisch aus Methacryloyloxyethylphosphat und Bismethacryloyloxyethylphosphat der Johucu Chemical, Japan.
2) Plexigum MB 319 der Firma Röhm, Darmstadt.
3) Umsetzungsprodukt von Perfluordodecansäure mit Glycidylmethacrylat.
4) Methacrylsäurederivat des Bisphenol A
Zur Herstellung der Harzkomponenten wird Polymethylmethacrylat unter intensivem Rühren in den entsprechenden Monomeren gelöst.

**Initiatorkomponente B**

5,0 g 9-BBN werden unter vollständigen Sauerstoffausschluß in einem 250-ml-Kolben vorgelegt. In diesen Kolben werden im Hochvakuum ($10^{-4}$ Torr) 100 g trockenes, frisch destilliertes Methylmethacrylat umkondensiert. Der Kolben wird verschlossen und geschüttelt, bis das 9-BBN in Lösung gegangen ist. Nach zwei Tagen zeigt das Gemisch eine deutlich erhöhte Viskosität. Es werden dann - ebenfalls unter vollständigem Sauerstoffausschluß. - 0,5 g sauerstofffreie, unter Argon destillierte Methacrylsäure und 5,0 g 9-BBN zugegeben. Diese Mischung ist ohne weitere Viskositätszunahme lagerstabil.

**Tabelle 2**

Übersicht über die gemessenen Zugfestigkeiten (N cm$^{-2}$)

| Harzkomponente A | Härtekomponente B |
|---|---|
| A 1 | 270-810 |
| A 2 | 340-640 |
| A 3 | 300-770 |
| A 4 | 250-550 |
| A 5 | 130-150 |
| A 6 | 300-350 |

**Patentansprüche** für die Vertragsstaaten BE CH DE FR GB IT LI NL SE

1. 2-komponentige No-Mix-Klebstoffsysteme auf Basis einer polymerisierbare Monomere mit ethylenischen Doppelbindungen enthaltenden Komponente (A) und einer das radikalische Startersystem enthaltenden Komponente (B), dadurch gekennzeichnet, daß das Startersystem (B) eine bei Normaltemperatur nicht selbstentzündliche homogene Mischung wenigstens eines mit der Komponente A verträglichen Polymeren, mit Organo-Borverbindungen mit wenigstens einer durch Sauerstoff aktivierbaren B-C-Bindung und

8

gewünschtenfalls Lösungsmittel ist.

2. No-Mix-Klebstoffsysteme nach Anspruch 1, dadurch gekennzeichnet, daß die Komponente B Alkyl- und/oder Arylreste aufweisende Organo-Borverbindungen enthält, die auch B-H-Bindungen besitzen können.

3. No-Mix-Klebstoffsysteme nach Ansprüchen 1 und 2 dadurch gekennzeichnet, daß in der Komponente B wenigstens eine Bortrialkylverbindung und/oder wenigstens eine Boralkylhydridverbindung - in diesem Fall insbesondere ein Dialkylborhydrid - vorliegen.

4. No-Mix-Klebstoffsysteme nach Ansprüchen 1 bis 3, dadurch gekennzeichnet, daß die Organo-Borverbindungen bei Normaltemperatur oder nur schwach erhöhten Temperaturen durch Luftzutritt aktivierbar sind.

5. No-Mix-Klebstoffsysteme nach Ansprüchen 1 bis 4, dadurch gekennzeichnet, daß auch die reine Organo-Borverbindung der Komponente B bei Normaltemperatur an Luft nicht selbst entzündlich ist.

6. No-Mix-Klebstoffsysteme nach Ansprüchen 1 bis 5, dadurch gekennzeichnet, daß das Polymere der Komponente B ein unter dem Einfluß der Organo-Borverbindungen in situ hergestelltes polymeres Material ist.

7. No-Mix-Klebstoffsysteme nach Anspruch 6, dadurch gekennzeichnet, daß die Komponente B einen Inhibitor gegen anionische Polymerisation enthält, der vorzugsweise eine freie Carboxylgruppe aufweist.

8. No-Mix-Klebstoffsysteme nach Ansprüchen 1 bis 7, dadurch gekennzeichnet, daß das Polymere der Komponente B ein Polymerisat auf Basis von Derivaten - vorzugsweise Estern und/oder gegebenenfalls substituierten Säureamiden - der (Meth)-acrylsäure ist, das insbesondere unter Ausschluß von Sauerstoff in situ unter dem Einfluß der Organo-Borverbindungen aus seinen Monomeren hergestellt worden ist.

9. No-Mix-Klebstoffsysteme nach Ansprüchen 1 bis 8, dadurch gekennzeichnet, daß die Komponente A ein radikalisch polymerisierbares Klebersystem auf Basis von Derivaten - vorzugsweise Estern und/oder Säureamiden - der (Meth)-acrylsäure ist, das vorzugsweise diese polymerisierbaren Komponenten in homogener Abmischung mit Polymeren enthält.

10. No-Mix-Klebstoffsysteme nach Ansprüchen 1 bis 9, dadurch gekennzeichnet, daß die Komponenten A und B bei Raumtemperatur fließ- bzw. streichfähig sind.

11. Verfahren zur Herstellung einer durch Zutritt von Luftsauerstoff aktivierbaren, Organo-Borverbindungen als Polymerisationskatalysatoren enthaltenden Reaktionskomponente B für No-Mix-Klebstoffsysteme nach Ansprüchen 1 bis 10, dadurch gekennzeichnet, daß man die Reaktionskomponente B herstellt, in dem man unter Ausschluß von Sauerstoff polymerisierbare Monomere mit ethylenischen Doppelbindungen - insbesondere Derivate von (Meth)-acrylsäure - unter dem Einfluß der Organo-Borverbindungen polymerisiert und die Polymerisition nach Erreichen der verarbeitungstechnisch erforderlichen Eindickung durch Zugabe eines anionischen Inhibitors abbricht.

12. Verfahren zur Herstellung von No-Mix-Klebstoffen nach Anspruch 11, dadurch gekennzeichnet, daß man bei der Herstellung der Komponente B Boralkyl- und/oder Borarylverbindungen, insbesondere Dialkylborhydrid, einsetzt.

13. Verfahren zur Herstellung von No-Mix-Klebstoffen nach den Ansprüchen 11 und 12, dadurch gekennzeichnet, daß man bei der Herstellung der Komponente B als Organo-Borverbindung eine unter Normalbedingungen an Luft nicht selbst entzündliche Komponente, insbesondere 9-Borabicyclo-[3.3.1] nonan einsetzt.

14. Verfahren zur Herstellung von No-Mix-Klebstoffen nach den Ansprüchen 11 - 13, dadurch gekennzeichnet, daß man bei der Herstellung der Komponente B als anionischen Polymerisationsinhibitor eine bevorzugt ethylenisch ungesättigte Carbonsäure mit freier Carboxylgruppe - insbesondere Acrylsäure und/oder Methacrylsäure - einsetzt.

15. Verfahren zur Herstellung von No-Mix-Klebstoffen nach den Ansprüchen 11 - 14, dadurch gekennzeichnet, daß man bei der Herstellung der Komponente B die Organo-Borverbindung der Komponente mehrstufig zusetzt und dabei einen ersten Anteil zur in situ-Herstellung des Polymeren einsetzt und einen zweiten Anteil nach der Einmischung des anionischen Inhibitors zusetzt.

16. Verwendung der No-Mix-Klebstoffe nach den Ansprüchen 1 bis 18 zum Verbinden von Metall, Holz, Glas, Keramik und Kunststoffen, ausgenommen in der Chirurgie und Dentalmedizin.

17. No-Mix-Klebstoffe nach den Ansprüchen 1 - 10 zur Verwendung als chirurgisches Bindemittel zum Verbinden von hartem Gewebe, insbesondere Knochen, gewünschtenfalls mit Metallen oder Kunststoffen oder als dentalmedizinisches Binde- und Füllmaterial.


**Patentansprüche** für den Vertragsstaat AT

1. Verfahren zur Herstellung 2-komponentiger No-Mix-Klebstoffsysteme auf Basis einer polymerisierbare Monomere mit ethylenischen Doppelbindungen enthaltenden Komponente (A) und einer das radikalische Startersystem enthaltenden Komponente (B), dadurch gekennzeichnet, daß man als Startersystem (B) eine bei Normaltemperatur nicht selbst-entzündliche homogene Mischung wenigstens eines mit der Komponente (A) verträglichen Polymeren mit Organo-Borverbindungen mit wenigstens einer durch Sauerstoff aktivierbaren B-C-Bindung und gewünschtenfalls Lösungsmittel einsetzt.

2. Verfahren nach Anspruch 1, dadurch gekennzeichnet, daß die Komponente B Alkyl- und/oder Arylreste aufweisende Organo-Borverbindungen enthält, die auch B-H-Bindungen besitzen können.

3. Verfahren nach den Ansprüchen 1 und 2, dadurch gekennzeichnet, daß in der Komponente B wenigstens eine Bortrialkylverbindung und/oder wenigstens eine Boralkylhydridverbindung - in diesem Fall insbesondere ein Dialkylborhydrid - vorliegen.

4. Verfahren nach den Ansprüchen 1 bis 3, dadurch gekennzeichnet, daß die Organo-Borverbindungen bei Normaltemperatur oder nur schwach erhöhten Temperaturen durch Luftzutritt aktivierbar sind.

5. Verfahren nach den Ansprüchen 1 bis 4, dadurch gekennzeichnet, daß auch die reine Organo-Borverbindung der Komponente B bei Normaltemperatur an Luft nicht selbst entzündlich ist.

6. Verfahren nach den Ansprüchen 1 bis 5, dadurch gekennzeichnet, daß das Polymere der Komponente B ein unter dem Einfluß der Organo-Borverbindungen in situ hergestelltes polymeres Material ist.

7. Verfahren nach Anspruch 6, dadurch gekennzeichnet, daß die Komponente B einen Inhibitor gegen anionische Polymerisation enthält, der vorzugsweise eine freie Carboxylgruppe aufweist.

8. Verfahren nach den Ansprüchen 1 bis 7, dadurch gekennzeichnet, daß das Polymere der Komponente B ein Polymerisat auf Basis von Derivaten - vorzugsweise Estern und/oder gegebenenfalls substituierten Säureamiden - der (Meth)-acrylsäure ist, das insbesondere unter Ausschluß von Sauerstoff in situ unter dem Einfluß der Organo-Borverbindungen aus seinen Monomeren hergestellt worden ist.

9. Verfahren nach den Ansprüchen 1 bis 8, dadurch gekennzeichnet, daß die Komponente A ein radikalisch polymerisierbares Klebersystem auf Basis von Derivaten - vorzugsweise Estern und/oder Säureamiden - der (Meth)-acrylsäure ist, das vorzugsweise diese polymerisierbaren Komponenten in homogener Abmischung mit Polymeren enthält.

10. Verfahren nach den Ansprüchen 1 bis 9, dadurch gekennzeichnet, daß die Komponenten A und B bei Raumtemperatur fließ- bzw. streichfähig sind.

11. Verfahren zur Herstellung einer durch Zutritt von Luftsauerstoff aktivierbaren, Organo-Borverbindungen als Polymerisationskatalysatoren enthaltenden Reaktionskomponente B für No-Mix-Klebstoffsysteme nach Ansprüchen 1 bis 10, dadurch gekennzeichnet, daß man die Reaktionskomponente B herstellt, in dem man unter Ausschluß von Sauerstoff polymerisierbare Monomere mit ethylenischen Doppelbindungen - insbesondere Derivate von (Meth)-acrylsäure - unter dem Einfluß der Organo-Borverbindungen polymerisiert und die Polymerisation nach Erreichen der verarbeitungstechnisch erforderlichen Eindickung durch Zugabe eines anionischen Inhibitors abbricht.

12. Verfahren zur Herstellung von No-Mix-Klebstoffen nach Anspruch 11, dadurch gekennzeichnet, daß man bei der Herstellung der Komponente B Boralkyl- und/oder Borarylverbindungen, insbesondere Dialkylborhydrid, einsetzt.

13. Verfahren zur Herstellung von No-Mix-Klebstoffen nach den Ansprüchen 11 und 12, dadurch gekennzeichnet, daß man bei der Herstellung der Komponente B als Organo-Borverbindung eine unter Normalbedingungen an Luft nicht selbst entzündliche Komponente, insbesondere 9-Borabicyclo-[3.3.1] nonan einsetzt.

14. Verfahren zur Herstellung von No-Mix-Klebstoffen nach den Ansprüchen 11 bis 13, dadurch gekennzeichnet, daß man bei der Herstellung der Komponente B als anionischen Polymerisationsinhibitor eine bevorzugt ethylenisch ungesättigte Carbonsäure mit freier Carboxylgruppe - insbesondere Acrylsäure und/oder Methacrylsäure - einsetzt.

15. Verfahren zur Herstellung von No-Mix-Klebstoffen nach den Ansprüchen 11 bis 14, dadurch gekennzeichnet, daß man bei der Herstellung der Komponente B die Organo-Borverbindung der Komponente mehrstufig zusetzt und dabei einen ersten Anteil zur in situ-Herstellung des Polymeren einsetzt und einen zweiten Anteil nach der Einmischung des anionischen Inhibitors zusetzt.

16. Verwendung der nach den Ansprüchen 1 bis 10 hergestellten No-Mix-Klebstoffe zum Verbinden von Metall, Holz, Glas, Keramik und Kunststoffen, ausgenommen in der Chirurgie und Dentalmedizin.

**Claims** for the contracting States: BE, CH, DE, FR, GB, IT, LI, NL, SE

1. 2-Component no-mix adhesive systems based on a component (A) containing polymerizable monomers with ethylenic double bonds and a component (B) containing the radical initiator system, characterized in that the initiator system (B) is a mixture - which does not ignite spontaneously at normal temperature - of at least one polymer compatible with component (A) with organoboron compounds containing at least one oxygen-activatable B-C bond and, if desired, solvents.

2. No-mix adhesive systems as claimed in Claim 1, characterized in that component (B) contains organoboron compounds with alkyl and/or aryl radicals which may even have B-H bonds.

3. No-mix adhesive systems as claimed in Claims 1 and 2, characterized in that at least one boron trialkyl compound and/or at least one boron alkyl hydride compound, in this case particularly a dialkyl borohydride compound, are present in component (B).

4. No-mix adhesive systems as claimed in Claims 1 to 3, characterized in that the organoboron compounds are activatable by air at normal temperature or only slightly elevated temperatures.

5. No-mix adhesive systems as claimed in Claims 1 to 4, characterized in that the pure organoboron compound of component (B) also does not ignite spontaneously in air at normal temperature.

6. No-mix adhesive systems as claimed in Claims 1 to 5, characterized in that the polymer of component (B) is a polymeric material produced in situ under the influence of the organoboron compounds.

7. No-mix adhesive systems as claimed in Claim 6, characterized in that component (B) contains an inhibitor against anionic polymerization which preferably contains a free carboxyl group.

8. No-mix adhesive systems as claimed in Claims 1 to 7, characterized in that the polymer of component (B) is a polymer based on derivatives - preferably esters and/or optionally substituted acid amides - of (meth)acrylic acid which has been produced in situ from its monomers under the influence of the organoboron compounds, particularly in the absence of oxygen.

9. No-mix adhesive systems as claimed in Claims 1 to 8, characterized in that component (A) is a radically polymerizable adhesive system based on derivatives - preferably esters and/or acid amides - of (meth)acrylic acid which preferably contains these polymerizable components in homogeneous admixture with polymers.

10. No-mix adhesive systems as claimed in Claims 1 to 9, characterized in that components (A) and (B) are free-flowing and spreadable at room temperature.

11. A process for producing an air-activatable reaction component (B) containing organoboron compounds as polymerization catalysts for the no-mix adhesive systems claimed in Claims 1 to 10, characterized in that the reaction component (B) is prepared by polymerizing monomers with ethylenic double bonds polymerizable in the absence of oxygen - particularly derivatives of (meth)acrylic acid - under the influence of the organoboron compounds and terminating polymerization by adding an anionic inhibitor after the thickening required for application has been reached.

12. A process for the production of no-mix adhesives as claimed in Claim 11, characterized in that boronalkyl and/or boronaryl compounds, particularly dialkyl borohydride, are used in the production of component (B).

13. A process for the production of no-mix adhesives as claimed in Claims 11 and 12, characterized in that a component which does not ignite spontaneously in air under normal conditions, more particularly 9-borabicyclo- [3.3.1]-nonane is used as the organoboron compound in the preparation of component (B).

14. A process for the production of no-mix adhesives as claimed in Claims 11 to 13, characterized in that a preferably ethylenically unsaturated carboxylic acid containing a free carboxyl group, more particularly acrylic acid and/or methacrylic acid, is used as anionic polymerization inhibitor in the preparation of component (B).

15. A process for the production of no-mix adhesives as claimed in Claims 11 to 14, characterized in that, in the preparation of component (B), the organoboron compound of the component is added in several stages, a first portion being used for the in situ production of the polymer and a second portion being added after the anionic inhibitor has been mixed in.

16. The use of the no-mix adhesives claimed in Claims 1 to 10 for bonding metals, wood, glass, ceramics and plastics, except in surgery and dentistry.

17. No-mix adhesives as claimed in Claims 1 to 10 for use as a surgical binder for bonding hard tissue, more especially bones, if desired to metals or plastics, or as a dental binder and filler.


Claims for the contracting State : AT

1. A process for the production of 2-component no-mix adhesive systems based on a component (A) containing polymerizable monomers with ethylenic double bonds and a component (B) containing the radical initiator system, characterized in that a homogeneous mixture - which does not ignite spontaneously at normal temperature - of at least one polymer compatible with component (A) with organoboron compounds containing at least one oxygen-activatable B-C bond and, if desired, solvents is used as the initiator system (B).

2. A process as claimed in Claim 1, characterized in that component (B) contains organoboron compounds with alkyl and/or aryl radicals which may even have B-H bonds.

3. A process as claimed in Claims 1 and 2, characterized in that at least one boron trialkyl compound and/or at least one boron alkyl hydride compound - in this case particularly a dialkyl borohydride - are present in component (B).

4. A process as claimed in Claims 1 to 3, characterized in that the organoboron compounds are activatable by air at normal temperature or only slightly elevated temperatures.

5. A process as claimed in Claims 1 to 4, characterized in that the pure organoboron compound of component (B) also does not ignite spontaneously in air at normal temperature.

6. A process as claimed in Claims 1 to 5, characterized in that the polymer of component (B) is a polymeric material produced in situ under the influence of the organoboron compounds.

7. A process as claimed in Claim 6, characterized in that component (B) contains an inhibitor against anionic polymerization which preferably contains a free carboxyl group.

8. A process as claimed in Claims 1 to 7, characterized in that the polymer of component (B) is a polymer based on derivatives - preferably esters and/or optionally substituted acid amides - of (meth)acrylic acid which has been produced in situ from its monomers under the influence of the organoboron compounds, particularly in the absence of oxygen.

9. A process as claimed in Claims 1 to 8, characterized in that component (A) is a radically polymerizable adhesive system based on derivatives - preferably esters and/or acid amides - of (meth)acrylic acid which preferably contains these polymerizable components in homogeneous admixture with polymers.

10. A process as claimed in Claims 1 to 9, characterized in that components (A) and (B) are free-flowing and spreadable at room temperature.

11. A process for producing an air-activatable reaction component (B) containing organoboron compounds as polymerization catalysts for no-mix adhesive systems as claimed in Claims 1 to 10, characterized in that the reaction component (B) is prepared by polymerizing monomers with ethylenic double bonds polymerizable in the absence of oxygen - particularly derivatives of (meth)acrylic acid - under the influence of the organoboron compounds and terminating polymerization by adding an anionic inhibitor after the thickening required for application has been reached.

12. A process for the production of no-mix adhesives as claimed in Claim 11, characterized in that boronalkyl and/or boronaryl compounds, particularly dialkyl borohydride, are used in the production of component (B).

13. A process for the production of no-mix adhesives as claimed in Claims 11 and 12, characterized in that a component which does not ignite spontaneously in air under normal conditions, more particularly 9-borabicyclo- [3.3.1]-nonane is used as the organoboron compound in the preparation of component (B).

14. A process for the production of no-mix adhesives as claimed in Claims 11 to 13, characterized in that a preferably ethylenically unsaturated carboxylic acid containing a free carboxyl group, more particularly acrylic acid and/or methacrylic acid, is used as anionic polymerization inhibitor in the preparation of component (B).

15. A process for the production of no-mix adhesives as claimed in Claims 11 to 14, characterized in that, in the preparation of component (B), the organoboron compound of the component is added in several stages, a first portion being used for the in situ production of the polymer and a second portion being added after the anionic inhibitor has been mixed in.

16. The use of the no-mix adhesives claimed in Claims 1 to 10 for bonding metals, wood, glass, ceramics and plastics, except in surgery and dentistry.

**Revendications** pour les Etats contractants: BE, CH, DE, FR, GB, IT, LI, NL, SE

1. Procédé pour la fabrication d'un système adhésif "no-mix" à deux composants à base d'un composant (A) contenant un monomère polymérisable possédant des doubles liaisons éthyléniques, et un composant (B) contenant le système radical d'amorçage, caractérisé en ce que le système (B) d'amorçage ou durcisseur est un mélange qui, à la tempérautre normale n'est pas auto-inflammable, homogène, d'au moins un polymère compatible avec le composant (A) avec des composés organiques du bore comportant au moins une liaison B-C qui peut être activée par l'oxygène, et, en cas de besoin, un solvant.

2. Procédé suivant la revendication 1, caractérisé en ce que le composant (B) contient des composés organiques du bore présentant des restes alcoyle et/ou aryle, et qui peuvent présenter aussi des liaisons B - H.

3. Procédé suivant les revendications 1 et 2, caractérisé en ce que, dans le composant (B), on trouve au moins un composé bore-trialcoyle et/ou au moins un composé boralcoyl-hydrure et dans ce cas plus particulièrement un dialcoyleborhydrure.

4. Procédé suivant les revendications 1 à 3, caractérisé en ce que les composés organiques du bore peuvent être activés à la température normale ou à des températures faiblement augmentées, par une arrivée d'air.

5. Procédé suivant les revendications 1 à 4, caractérisé en ce que le composé organique du bore, pur, du composant (B) n'est pas non plus auto-inflammable à l'air à la température normale.

6. Procédé suivant les revendications 1 à 5, caractérisé en ce que le polymère du composant B est une matière polymère fabriquée in situ, sous l'effet des composés organiques du bore.

7. Procédé suivant la revendication 6, caractérisé en ce que le composant B contient un inhibiteur de polymérisation anionique, qui comporte de préférence un groupe carboxyle libre.

8. Procédé suivant les revendications 1 à 7, caractérisé en ce que le polymère du composant B est un polymérisat à base de dérivés, de préférence des esters, et/ou des amido -acides, éventuellement substitués, de l'acide (méth)-acrylique, qui a été préparé spécialement à partir de son monomère, à l'abri de l'oxygène, in situ, sous l'effet des composés organiques du bore.

9. Procédé suivant les revendications 1 à 8, caractérisé en ce que le composant A est un système adhésif, polymérisable radicalement, à base de dérivés, de préférence des esters et/ou des amido-acides, de l'acide (méth)-acrylique, qui contient de préférence ce composé polymérisable en mélange homogène avec des polymères.

10. Procédé suivant les revendications 1 à 9, caractérisé en ce que les composés A et B sont fluides et applicables au pinceau à la température ambiante.

11. Procédé pour la préparation d'un composant réactif B pour un système adhésif "no-mix" suivant l'une des revendications 1 à 10, contenant comme catalyseurs de polymérisation, des composés organiques du bore qui peuvent être activés par l'effet de l'oxygène de l'air, procédé caractérisé en ce que l'on produit le composant réactif B, en polymérisant, à l'abri de l'oxygène, sous l'effet des composés organiques du bore, des monomères polymérisables, comportant des doubles liaisons éthyléniques, en particulier des dérivés de l'acide (méth)acrylique, et que l'on met fin à la polymérisation quand est atteint l'épaississement nécessaire pour la technique d'application, par addition d'un inhibiteur anionique.

12. Procédé pour la préparation d'adhésifs "no-mix" suivant la revendication 11, caractérisé en ce que l'on utilise dans la préparation du composant B, des composés boralcoylés et/ou borarylés, en particulier les dialcoylborohydrures.

13. Procédé pour la préparation d'adhésifs "no-mix" suivant les revendications 11 et 12, caractérisé en ce qu'on utilise, pour la préparation du composant B, comme composé organique du bore, un composant qui, dans les conditions normales, n'est pas auto-inflammable à l'air, en particulier le 9-borobicyclo-(3.3.1) nonane.

14. Procédé pour la préparation d'adhésifs "no-mix" suivant les revendications 11 à 13, caractérisé en ce que l'on utilise, dans la préparation du composant B, comme inhibiteur de polymérisation anionique, un acide carboxylique éthylénique insaturé, comportant des groupes carboxyle libres, en particulier de l'acide acrylique et/ou de l'acide méthacrylique.

15. Procédé pour la préparation d'adhésifs "no-mix" suivant les revendications 11 à 14, caractérisé en ce que l'on ajoute, pour la préparation du composant B, le composé organique du bore du composant en plusieurs étapes, et met ici en oeuvre une première proportion pour la production in situ du polymère, et ajoute une seconde partie après avoir introduit dans le mélange l'inhibiteur anionique.

16. Utilisation d'adhésif "no-mix", suivant les revendications 1 à 10, pour la réunion de métaux, bois verre, matières plastiques, les utilisations en chirurgie et en médecine dentaire étant exceptées.

17. Adhésifs "no-mix" suivant les revendications 1 à 10 destinés à être utilisés comme liants chirurgicaux pour réunir des tissus durs, en particulier des os, si on le désire avec des métaux ou des matières plastiques, ou comme liant et matériau de remplissage en médecine dentaire.

**Revendications** pour l' Etat contractant : AT

1. Procédé pour la fabrication d'un système adhésif "no-mix" à deux composants à base d'un composant (A) contenant un monomère polymérisable possédant des doubles liaisons éthyléniques, et un composant (B) contenant le système radical d'amorçage, caractérisé en ce que le système (B) d'amorçage ou durcisseur est un mélange qui, à la tempérautre normale n'est pas auto-inflammable, homogène, d'au moins un polymère compatible avec le composant (A) avec des composés organiques du bore comportant au moins une liaison B-C qui peut être activée par l'oxygène, et, en cas de besoin, un solvant.

2. Procédé suivant la revendication 1, caractérisé en ce que le composant (B) contient des composés organiques du bore présentant des restes alcoyle et/ou aryle, et qui peuvent présenter aussi des liaisons B - H.

3. Procédé suivant les revendications 1 et 2, caractérisé en ce que, dans le composant (B), on trouve au moins un composé bore-trialcoyle et/ou au moins un composé boralcoyl-hydrure et dans ce cas plus particulièrement un dialcoyleborhydrure.

4. Procédé suivant les revendications 1 à 3, caractérisé en ce que les composés organiques du bore peuvent être activés à la température normale ou à des températures faiblement augmentées, par une arrivée d'air.

5. Procédé suivant les revendications 1 à 4, caractérisé en ce que le composé organique du bore, pur, du composant (B) n'est pas non plus auto-inflammable à l'air à la température normale.

6. Procédé suivant les revendications 1 à 5, caractérisé en ce que le polymère du composant B est une matière polymère fabriquée in situ, sous l'effet des composés organiques du bore.

7. Procédé suivant la revendication 6, caractérisé en ce que le composant B contient un inhibiteur de polymérisation anionique, qui comporte de préférence un groupe carboxyle libre.

8. Procédé suivant les revendications 1 à 7, caractérisé en ce que le polymère du composant B est un polymérisat à base de dérivés, de préférence des esters, et/ou des amido -acides, éventuellement substitués, de l'acide (méth)-acrylique, qui a été préparé spécialement à partir de son monomère, à l'abri de l'oxygène, in situ, sous l'effet des composés organiques du bore.

9. Procédé suivant les revendications 1 à 8, caractérisé en ce que le composant A est un système adhésif, polymérisable radicalement, à base de dérivés, de préférence des esters et/ou des amido-acides, de l'acide (méth)-acrylique, qui contient de préférence ce composé polymérisable en mélange homogène avec des polymères.

10. Procédé suivant les revendications 1 à 9, caractérisé en ce que les composés A et B sont fluides et applicables au pinceau à la température ambiante.

11. Procédé pour la préparation d'un composant réactif B pour un système adhésif "no-mix" suivant l'une des revendications 1 à 10, contenant comme catalyseurs de polymérisation, des composés organiques du bore qui peuvent être activés par l'effet de l'oxygène de l'air, procédé caractérisé en ce que l'on produit le composant réactif B, en polymérisant, à l'abri de l'oxygène, sous l'effet des composés organiques du bore, des monomères polymérisables, comportant des doubles liaisons éthyléniques, en particulier des dérivés de l'acide (méth)acrylique, et que l'on met fin à la polymérisation quand est atteint l'épaississement nécessaire pour la technique d'application, par addition d'un inhibiteur anionique.

12. Procédé pour la préparation d'adhésifs "no-mix" suivant la revendication 11, caractérisé en ce que l'on utilise dans la préparation du composant B, des composés boralcoylés et/ou borarylés, en particulier les dialcoylborohydrures.

13. Procédé pour la préparation d'adhésifs "no-mix" suivant les revendications 11 et 12, caractérisé en ce qu'on utilise, pour la préparation du composant B, comme composé organique du bore, un composant qui, dans les conditions normales, n'est pas auto-inflammable à l'air, en particulier le 9-borobicyclo-(3.3.1)nonane.

14. Procédé pour la préparation d'adhésifs "no-mix" suivant les revendications 11 à 13, caractérisé en ce que l'on utilise, dans la préparation du composant B, comme inhibiteur de polymérisation anionique, un acide carboxylique éthylénique insaturé, comportant des groupes carboxyle libres, en particulier de l'acide acrylique et/ou de l'acide méthacrylique.

15. Procédé pour la préparation d'adhésifs "no-mix" suivant les revendications 11 à 14, caractérisé en ce que l'on ajoute, pour la préparation du composant B, le composé organique du bore du composant en plusieurs étapes, et met ici en oeuvre une première proportion pour la production in situ du polymère, et ajoute une seconde partie après avoir introduit dans le mélange l'inhibiteur anionique.

16. Utilisation d'adhésif "no-mix" suivant les revendications 1 à 10, pour la réunion de métaux, bois verre, matières plastiques, les utilisations en chirurgie et en médecine dentaire étant exceptées.